(19)

(11) **EP 3 939 245 B1**

(12) **EUROPÄISCHE PATENTSCHRIFT**

(45) Veröffentlichungstag und Bekanntmachung des Hinweises auf die Patenterteilung:
**01.04.2026 Patentblatt 2026/14**

(21) Anmeldenummer: **20703199.8**

(22) Anmeldetag: **31.01.2020**

(51) Internationale Patentklassifikation (IPC):
***H04N 1/60*** $^{(2006.01)}$ ***B41J 2/165*** $^{(2006.01)}$
***B41J 2/21*** $^{(2006.01)}$ ***B41J 25/00*** $^{(2006.01)}$

(52) Gemeinsame Patentklassifikation (CPC):
**H04N 1/6036; B41J 2/16526; B41J 2/16529; B41J 2/2139; B41J 2/2142; B41J 25/001; H04N 1/6047**

(86) Internationale Anmeldenummer:
**PCT/EP2020/052427**

(87) Internationale Veröffentlichungsnummer:
**WO 2020/157276 (06.08.2020 Gazette 2020/32)**

(54) **VERFAHREN ZUR QUALITÄTSSTEIGERUNG EINES INKJET-DRUCKBILDS**

METHOD FOR INCREASING THE QUALITY OF AN INKJET PRINTED IMAGE

PROCÉDÉ D’AMÉLIORATION QUALITATIVE D’UNE IMAGE IMPRIMÉE À JET D’ENCRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.02.2019 DE 102019102581**

(43) Veröffentlichungstag der Anmeldung:
**19.01.2022 Patentblatt 2022/03**

(73) Patentinhaber: **Windmöller & Hölscher KG**
**49525 Lengerich (DE)**

(72) Erfinder:
- **VOELSCHOW, Jens**
  **49525 Lengerich (DE)**
- **MICHAEL, Sven**
  **49525 Lengerich (DE)**
- **BOOSMANN, Thomas**
  **49525 Lengerich (DE)**

(56) Entgegenhaltungen:
**EP-A1- 2 537 677**
**WO-A1-2005/094054**
**WO-A1-2013/048373**
**US-A1- 2011 149 331**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 939 245 B1

Processed by Luminess, 75001 PARIS (FR)

## Beschreibung

Die Erfindung betrifft ein Verfahren zur Qualitätssteigerung eines Druckbilds einer Digitaldruckmaschine, das im Inkjet-Druckverfahren auf eine Materialbahn gedruckt wird, wobei die Digitaldruckmaschine einen Druckkopf mit Inkjet-Düsen, eine Bilderfassungseinheit zur Erfassung zumindest eines Teils des Druckbilds und eine Steuereinheit zur Ansteuerung des Druckkopfs umfasst. Außerdem betrifft die Erfindung eine Digitaldruckmaschine zur Durchführung eines derartigen Verfahrens.

Beim Inkjet-Druckverfahren auf eine laufende Materialbahn variieren die Drucklängen in der Regel zwischen 10 Metern bis zu einigen 1000 Metern. Insbesondere bei den Drucklängen im oberen Bereich tritt das Problem auf, dass die Qualität des Druckbilds nicht mehr der Qualität zu Beginn des Druckjobs entspricht, da im Laufe des Druckjobs die äußeren Störparameter (wie etwa Temperatur, Viskosität der Druckfarbe, etc) variieren. Insbesondere wirken sich die folgenden drei Einflüsse negativ auf die Qualität des Druckbilds aus:

- Veränderung der Farborte und Tonwertzunahme (TWZ)
- Verstopfung von einzelnen Inkjet-Düsen
- Dejustierung von Druckköpfen

US 2011/0149331 A1 offenbart in diesem Zusammenhang eine Fehlererkennung in gedruckten Bildern, bei dem ein berechnetes, mittels Parametern angepasstes Referenzbild Verwendung findet.

Aufgabe der Erfindung ist es, die Qualität des Druckbilds während des Druckjobs über die gesamte Drucklänge konstant zu halten.

Diese Aufgabe wird durch ein Verfahren gemäß dem Anspruch 1 und eine Digitaldruckmaschine nach dem Anspruch 9 gelöst.

Die Erfindung ermöglicht es, die oben genannten Veränderungen im Druckbild auf einfache Weise zu Erkennen und zu Korrigieren.

Die erfindungsgemäße Lösung basiert auf einem Verfahren, bei dem zu Beginn und/oder während eines Druckjobs ein Testchart gedruckt wird, dessen erste Bilddaten von der Bilderfassungseinheit erfasst und an die Steuereinheit übertragen werden, wobei in Abhängigkeit von den ersten Bilddaten eine Fehlerkorrektur von defekten Inkjet-Düsen und/oder und/oder eine Ausrichtung des dejustierten Druckkopfes durchgeführt wird, bei dem nach Abschluss der Fehlerkorrektur und/oder Ausrichtung ein Soll-Druckbild gedruckt wird, dessen Soll-Bilddaten von der Bilderfassungseinheit erfasst, an die Steuereinheit übertragen und dort abgespeichert werden, bei dem nach dem Druck des Soll-Druckbilds weitere Ist-Druckbilder gedruckt werden, deren Ist-Bilddaten von der Bilderfassungseinheit erfasst und in der Steuereinheit mit den Soll-Bilddaten verglichen und als Soll-Ist-Vergleichsbilddaten abgespeichert werden, wobei in Abhängigkeit der Soll-Ist-Vergleichsbilddaten eine Farbraum-Korrektur durchgeführt wird.

Die Fehlerkorrektur basiert dabei auf einer Minimierung der Delta-Farbinformation ($\Delta E$) im Lab-Farbraum der Soll-Ist-Vergleichsbilddaten. Hierzu werden die Steuerinformationen der Steuereinheit derart korrigiert, dass sich das $\Delta E$ verringert.

Bevor die bevorzugten Ausführungsformen aufgeführt werden, werden zunächst noch einige Fachbegriffe erläutert:

### Tonwertzunahme

Der Fachbegriff Tonwertzunahme (Abk.: TWZ) bezeichnet den Effekt, dass Rasterpunkte der Druckvorlage (z. B. einer digitalen Bilddatei oder einem Film) auf dem bedruckten Bogen verfahrensbedingt größer erscheinen, das Druckbild also dunkler wird als in der Vorlage vorgesehen. Genauer betrachtet, werden Rasterpunkte bei jeder technischen Übertragung nie ganz gleich übertragen, sondern in irgendeiner verfahrenstypischen Weise deformiert. Dabei treten Verformungen, Vergrößerungen, aber auch Verkleinerungen auf.

### Spektralsensor und Spektralwertfunktion

Jeder Mensch verfügt in der Netzhaut über drei Zapfenarten, die sich in ihrer spektralen Empfindlichkeit unterscheiden. Um die individuellen Unterschiede im menschlichen Farbempfinden auszugleichen, wurde ein "Normalbetrachter" in diversen Normen verbindlich festgelegt (insbesondere ISO 12647 und DIN 5033). Die Normalfarbwerte errechnen sich aus dem Spektrum des empfangenen Lichts, dem spektralen Reflexionsgrad der Farbe sowie den genormten Spektralwertfunktionen des Normalbetrachters. Mit den derart berechneten Normalfarbwerten lässt sich dann die mit einem Spektralsensor gemessen Farbe exakt beschreiben.

CIELAB-Farbmodell

Das CIELAB-Farbmodell beschreibt einen dreidimensionalen Farbraum, in dem entsprechende Farbunterschiede, die vom Menschen als gleich groß empfunden werden, auch jeweils messbar annähernd gleich große Abstände haben. Das Bedeutende an diesem Farbraum ist somit die Geräteunabhängigkeit und daraus resultierende Objektivität. Die drei Achsen des CIELAB-Farbraums sind wie folgt definiert:

L = Helligkeitsachse
a = Rot-Grün-Achse
b = Blau-Gelb-Achse

Die Koordinaten des CIELAB Farbraums werden häufig auch mit L*, a* und b* bezeichnet, um sie von den Hunter-Koordinaten Lab (1948 eingeführt von Richard Sewall Hunter) zu unterscheiden. Der Einfachheit halber wird in dieser Beschreibung jedoch auf die Bezeichnung L*, a* und b* verzichtet, d.h. der CIELAB Farbraum wird durchgängig mit Lab bezeichnet.

Der L-Wert bewegt sich immer zwischen 0 und 100. Dabei steht 0 für absolut schwarz und 100 für absolut weiß. Zur Gewährleistung einer eindeutigen Farbempfindung wurden ein Normalbetrachter und die Normallichtart definiert.

Der Unterschied zwischen zwei Farborten wird durch den Farbabstand ΔE ausgedrückt. Die Berechnung des Farbabstandes erfolgt nach der folgenden Formel:

$$\Delta E = \sqrt{\Delta L^2 + \Delta a^2 + \Delta b^2}$$

Die Werte ΔL, Δa und Δb sind jeweils die Differenzen zwischen den Komponenten der beiden Farborte. Je nach Anwendungsfall existieren darüber hinaus Weiterentwicklungen zu der obigen Abstandsformel, beispielsweise die aus der Literatur bekannten Farbabstandsformeln mit den Bezeichnungen $\Delta E_{CMC}$, $\Delta E_{94}$, $\Delta E_{99}$ oder $\Delta E_{00}$. Im Rahmen dieser Beschreibung wird unter dem Farbabstand ΔE daher jeder Farbabstand verstanden, der nach einer bestimmten Farbabstandsformel berechnet wurde, wobei der Fachmann in der Lage ist, die jeweils geeignete Farbabstandsformel für den jeweiligen Anwendungsfall auszuwählen.

Testchart

Ein Testchart (äquivalenter Begriff: Testpattern) im Sinne der vorliegenden Beschreibung ist ein getrennt vom Druckbild gedrucktes Muster, dessen Eigenschaften für die Durchführung bestimmter Tests optimiert ist.

Beispielsweise kann ein Testchart für die ICC-Farbkalibrierung eingesetzt werden. In diesem Fall besteht das Testchart aus einer begrenzten Anzahl von Farbfeldern, deren Zusammensetzung aus den Prozessfarben Cyan, Magenta, Gelb und Schwarz bekannt ist. Ein anderes Beispiel für die Verwendung eines Testcharts ist die Fehlerkorrektur von defekten Inkjet-Düsen. In diesem Fall ist das Testchart derart gestaltet, dass defekte Inkjet-Düsen einfach und eindeutig detektiert werden können. Ein weiteres Beispiel für die Verwendung eines Testcharts ist die Erkennung von dejustierten Druckköpfen.

Prüfmarkierung

Eine Prüfmarkierung (äquivalente Begriffe sind "Kalibrierungsfeld" oder "Prüfstreifen", engl. "spit bar") im Sinne der vorliegenden Beschreibung ist im Gegensatz zum Testchart ein Muster, das dem Druckbild überlagert ist. Hierbei sind mehrere Varianten möglich:
Zum einen ist es durch geeignete Rasterverfahren möglich, dass die Prüfmarkierung direkt innerhalb des Druckbilds gedruckt wird. In diesem Fall ist die Prüfmarkierung in der Regel mit dem bloßen Auge nicht erkennbar, während digitale Bilderfassungssysteme eine Erkennung und Weiterverarbeitung ermöglichen. Es ist beispielsweise auch möglich, dass die Prüfmarkierung aus gelben Mikropunkten besteht, die unter UV-Licht durch eine Kamera gut erfassbar sind. Derartige gelbe Mikropunkte werden auch zur Farbdruckermarkierung als sogenannter Machine Identification Code (MIC) eingesetzt.

Zum anderen ist es auch möglich, dass die Prüfmarkierung in Druckrichtung zwischen zwei Druckabschnitten angeordnet ist. Die Druckabschnitte können dabei einen sich wiederholenden Druckinhalt aufweisen oder aber auch in den Druckinhalten variieren.

Nach einer bevorzugten Ausführungsform ist vorgesehen, dass das Soll-Druckbild einen Teilbereich der nachfolgenden Ist-Druckbilder umfasst.

Nach einer weiteren bevorzugten Ausführungsform ist vorgesehen, dass ein Bildbereich des Ist-Druckbilds automatisiert als Soll-Druckbild bestimmt wird.

Nach einer weiteren bevorzugten Ausführungsform ist vorgesehen, dass der Bildbereich im Vergleich zu anderen Bildbereichen des Ist-Druckbilds den größten Farbumfang aufweist.

Nach einer weiteren bevorzugten Ausführungsform ist vorgesehen, dass die Bilderfassungseinheit eine Zeilenkamera ist.

Nach einer weiteren bevorzugten Ausführungsform ist vorgesehen, dass die Bilderfassungseinheit ein Spektralsensor ist.

Nach einer weiteren bevorzugten Ausführungsform ist vorgesehen, dass bei dem Vergleich der Ist-Bilddaten mit den Soll-Bilddaten die Histogrammdaten der jeweiligen Bilddaten zugrunde gelegt werden.

Nach einer weiteren bevorzugten Ausführungsform ist vorgesehen, dass weitere Testcharts gedruckt werden, deren Ergebnis zusätzlich in die Farbraum-Korrektur einfließen.

Weitere Einzelheiten und Vorteile der Erfindung werden anhand der beigefügten Zeichnung beschrieben. In dieser zeigt:

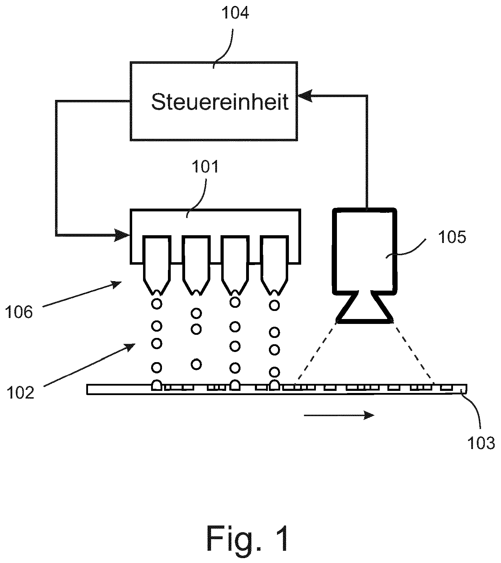

Fig. 1 ein vereinfachtes Blockschaltbild einer Digitaldruckmaschine mit einem Inkjet-Druckkopf zur Durchführung des erfindungsgemäßen Verfahrens.

Fig. 1 zeigt ein vereinfachtes Blockschaltbild einer Digitaldruckmaschine mit einem Inkjet-Druckkopf zur Durchführung des erfindungsgemäßen Verfahrens. Kern der Digitaldruckmaschine ist der Inkjet-Druckkopf 101, der mehrere Inkjet-Düsen 106 umfasst, mit denen aus der Drucktinte einzelne Tintentröpfchen 102 erzeugt und auf die laufende Materialbahn 103 übertragen werden.

Die für das Betreiben des Inkjet-Druckkopfes 101 benötigten Steuerinformationen werden von der Steuereinheit 104 berechnet und an den Inkjet-Druckkopf 101 übertragen. Die Steuereinheit 104 bezieht ihre Informationen über das zu druckende Bild wiederum aus dem digitalen Druckbild, das in Form von digitalen Soll-Rasterpunkten und digitalen Soll-Farbinformationen in der Steuereinheit 104 abgespeichert ist. Das gerasterte Druckbild wurde dabei vor dem Beginn des Druckjobs aus einem üblichen digitalen Bildformat (z. B. RGB 24 bit, TIFF oder PDF) im Rahmen des sogenannten Raster Image Prozesses (Abk.: RIP) erzeugt.

Über dem vollständig gedruckten Druckbild ist eine Bilderfassungseinheit 105 angeordnet, die beispielsweise aus einer Kamera bestehen kann.

Gemäß den einleitend genannten Fehlerquellen können nun die folgenden drei Korrekturmaßnahmen einzeln oder kombiniert durchgeführt werden:

- Farbraum-Korrektur
- Fehlerkorrektur von defekten Inkjet-Düsen
- Ausrichtung von dejustierten Druckköpfen

Die drei Maßnahmen werden im folgenden näher erläutert:

Farbraum-Korrektur

Zu Beginn und/oder während eines Druckjobs wird ein Testchart gedruckt, dessen erste Bilddaten von der Bilderfassungseinheit 105 erfasst und an die Steuereinheit 104 übertragen werden, wobei in Abhängigkeit von den ersten Bilddaten eine Fehlerkorrektur von defekten Inkjet-Düsen 106 und/oder Ausrichtung des dejustierten Druckkopfes 101 durchgeführt wird.

Nach Abschluss der Fehlerkorrektur und/oder der Ausrichtung wird sodann ein Soll-Druckbild gedruckt , dessen Soll-Bilddaten von der Bilderfassungseinheit 105 erfasst, an die Steuereinheit übertragen und dort abgespeichert werden.

Im Anschluss an den Druck des Soll-Druckbilds werden weitere Ist-Druckbilder gedruckt, deren Ist-Bilddaten von der Bilderfassungseinheit 105 erfasst und in der Steuereinheit 104 mit den Soll-Bilddaten verglichen werden, wobei in Abhängigkeit des Vergleichsergebnisses eine Farbraum-Korrektur durchgeführt wird. Das Vergleichsergebnis entspricht dabei der Delta-Farbinformation ($\Delta E$) im Lab-Farbraum. In Abhängigkeit von $\Delta E$ werden die Steuerinformationen der Steuereinheit 104 derart korrigiert, dass sich das $\Delta E$ verringert. Dies erfolgt in einer Regelschleife mit Korrektur der Steuerinformationen in der Steuereinheit 104, in den Rasterdaten durch Bildmanipulation oder in vorseparierten Contonedaten durch Gradationskurven.

Im Folgenden werden 2 Beispiele mit Zahlenwerten aufgeführt:

Beispiel 1

| **Hautton** | Cyan | Magenta | Yellow | Black | Orange | Green | Violett |
|---|---|---|---|---|---|---|---|
| Lab | 84/12/22 | | | | | | |
| 7c | 6,3 | 22,4 | 32,2 | 0 | 9,8 | 0 | 0 |
| | | | | | | | |
| **Messung** | | | | | | | |
| Lab | 80/12/22 | | | | | | |
| 7c | 12,2 | 28,6 | 37,6 | 0 | 9,8 | 0 | 0 |
| | | | | | | | |
| **Delta** | +5,9 | +6,2 | +5,4 | 0 | 0 | 0 | 0 |

Am Beispiel 1 ist zu erkennen, dass eine gemessene Veränderung der Helligkeit L von 84 zu 80 (ΔE von 4) in diesem Falle nur Auswirkungen auf die chromatischen Farben Cyan, Magenta, und Yellow hat. Durch eine entsprechende Korrektur in den vorseparierten Contonedaten durch Anpassung der Gradationskurven im Cyan-, Magenta- und Yellow-Kanal kann eine Korrektur erreicht werden. Anschließend werden nur die Farbauszüge neu gerastert, die sich auch verändert haben. In diesem Beispiel Cyan, Magenta und Yellow.

Beispiel 2

| **Grauton** | Cyan | Magenta | Yellow | Black | Orange | Green | Violett |
|---|---|---|---|---|---|---|---|
| Lab | 37/3/3 | | | | | | |
| 7c | 46,3 | 47,5 | 46,3 | 46,3 | 4,3 | 0 | 0 |
| | | | | | | | |
| **Messung** | | | | | | | |
| Lab | 30/3/3 | | | | | | |
| 7c | 47,8 | 47,8 | 47,8 | 57,6 | 4,7 | 0,8 | 0 |
| | | | | | | | |
| **Delta** | 1,5 | 0,3 | 1,5 | 11,3 | 0,4 | 0,8 | 0 |

Am Beispiel 2 hat sich die Helligkeit L von 37 auf 30 (ΔE von 7) verdunkelt, was zur Folge hat, das sich 6 Farben im 7c-Farbraum verändert haben. Bei einer Qualitätsanforderung von z.B. ΔE kleiner 2,5 ist es ausreichend, eine Anpassung der Gradationskurve für den Farbton Black durchzuführen. Damit keine Änderungen der Gradationskurven zu fehlerhaften Korrekturen anderer Farborte werden, muss eine Mindestanzahl an zu überwachenden Motivfarben gleichzeitig betrachtet und entsprechend auch immer gleichzeitig beurteilt und korrigiert werden.

Fehlerkorrektur von defekten Inkjet-Düsen

Zu Beginn und/oder während eines Druckjobs wird ein Testchart gedruckt, dessen erste Bilddaten von der Bilderfassungseinheit 105 erfasst und an die Steuereinheit 104 übertragen werden, wobei in Abhängigkeit von den ersten Bilddaten eine Fehlerkorrektur von defekten Inkjet-Düsen 106 und/oder Ausrichtung des dejustierten Druckkopfes 101 durchgeführt wird.

Nach Abschluss der Fehlerkorrektur wird sodann ein Soll-Druckbild gedruckt , dessen Soll-Bilddaten von der Bilderfassungseinheit 105 erfasst, an die Steuereinheit 104 übertragen und dort abgespeichert werden,

Im Anschluss an den Druck des Soll-Druckbilds werden weitere Ist-Druckbilder gedruckt, deren Ist-Bilddaten von der Bilderfassungseinheit 105 erfasst und in der Steuereinheit 104 mit den Soll-Bilddaten verglichen werden, wobei in Abhängigkeit des Vergleichsergebnisses eine Fehlerkorrektur von defekten Inkjet-Düsen 106 durchgeführt wird. Hierbei werden die defekten Inkjet-Düsen abgeschaltet und benachbarte Inkjet-Düsen übernehmen und bedrucken den Druckbereich der jeweils abgeschalteten Inkjet-Düse (sogenannte softwarebasierte Inkjet-Düsenüberlappung).

Ausrichtung von dejustierten Druckköpfen

Während des laufenden Druckjobs wird zumindest bei einem Teil der Druckbilder eine Prüfmarkierung zusammen mit dem Druckbild gedruckt. Die Prüfmarkierung liegt in der Steuereinheit 104 in digitaler Form vor und bildet die Soll-Bilddaten. Unmittelbar nach dem Drucken der Prüfmarkierung werden deren Ist-Bilddaten von der Bilderfassungseinheit 105 erfasst und in der Steuereinheit 104 mit den Soll-Bilddaten verglichen und als Soll-Ist-Vergleichsbilddaten abgespeichert, wobei in Abhängigkeit der Soll-Ist-Vergleichsbilddaten dejustierte Druckköpfe detektiert werden. In einem nächsten Schritt führt die Steuereinheit sodann eine Korrektur der der dejustierten Druckköpfe durch.

## Patentansprüche

1. Verfahren zur Qualitätssteigerung eines Druckbilds einer Digitaldruckmaschine, das im Inkjet-Druckverfahren auf eine Materialbahn gedruckt wird, wobei die Digitaldruckmaschine einen Druckkopf mit Inkjet-Düsen, eine Bilderfassungseinheit zur Erfassung zumindest eines Teils des Druckbilds und eine Steuereinheit zur Ansteuerung des Druckkopfs umfasst,

   bei dem die Steuereinheit ihre Informationen über das zu druckende Bild aus einem digitalen Druckbild, das in Form von digitalen Soll-Rasterpunkten und digitalen Soll-Farbinformationen in der Steuereinheit abgespeichert ist, bezieht, bei dem das gerasterte Druckbild vor dem Beginn eines Druckjobs aus einem üblichen digitalen Bildformat wie z.B. RGB 24 bit, TIFF oder PDF im Rahmen eines Raster Image Prozesses erzeugt wird,
   bei dem zu Beginn und/oder während des Druckjobs ein Testchart gedruckt wird, dessen erste Bilddaten von der Bilderfassungseinheit erfasst und an die Steuereinheit übertragen werden, wobei in Abhängigkeit von den ersten Bilddaten eine Fehlerkorrektur von defekten Inkjet-Düsen und/oder eine Ausrichtung des dejustierten Druckkopfes durchgeführt wird,
   bei dem nach Abschluss der Fehlerkorrektur und/oder Ausrichtung sodann ein Soll-Druckbild gedruckt wird, dessen Soll-Bilddaten von der Bilderfassungseinheit erfasst, an die Steuereinheit übertragen und dort abgespeichert werden,
   bei dem im Anschluss an den Druck des Soll-Druckbilds weitere Ist-Druckbilder gedruckt werden, deren Ist-Bilddaten von der Bilderfassungseinheit erfasst und in der Steuereinheit mit den Soll-Bilddaten verglichen und als Soll-Ist-Vergleichsbilddaten abgespeichert werden,
   wobei in Abhängigkeit der Soll-Ist-Vergleichsbilddaten eine Farbraum-Korrektur durchgeführt wird, wobei das Vergleichsergebnis dabei einer Delta-Farbinformation im Lab-Farbraum entspricht und in Abhängigkeit von der Delta-Farbinformation die Steuerinformationen der Steuereinheit in
   einer Regelschleife mit Korrektur der Steuerinformationen in der Steuereinheit in den Rasterdaten durch Bildmanipulation oder in vorseparierten Contonedaten durch Gradationskurven derart korrigiert werden, dass sich die Delta-Farbinformation verringert.

2. Verfahren nach Anspruch 1, wobei das Soll-Druckbild einen Teilbereich der nachfolgenden Ist-Druckbilder umfasst.

3. Verfahren nach einem der Ansprüche 1 - 2, wobei ein Bildbereich des Ist-Druckbilds automatisiert als Soll-Druckbild bestimmt wird.

4. Verfahren nach Anspruch 3, wobei der Bildbereich im Vergleich zu anderen Bildbereichen des Ist-Druckbilds den größten Farbumfang aufweist.

5. Verfahren nach einem der Ansprüche 1 - 4, wobei die Bilderfassungseinheit eine Zeilenkamera ist.

6. Verfahren nach einem der Ansprüche 1 - 4, wobei die Bilderfassungseinheit ein Spektralsensor ist.

7. Verfahren nach einem der Ansprüche 1 - 5, wobei bei dem Vergleich der Ist-Bilddaten mit den Soll-Bilddaten die Histogrammdaten der jeweiligen Bilddaten zugrunde gelegt werden.

8. Verfahren nach einem der Ansprüche 1 - 7, wobei weitere Testcharts gedruckt werden, deren Ergebnis zusätzlich in die Farbraum-Korrektur einfließen.

9. Digitaldruckmaschine,

mit einem Druckkopf mit Inkjet-Düsen zum Drucken eines Druckbilds im Inkjet-Druckverfahren auf eine Materialbahn,
mit einer Bilderfassungseinheit zur Erfassung zumindest eines Teils des Druckbilds, und
mit einer Steuereinheit zur Ansteuerung des Druckkopfs gemäß einem Verfahren der Ansprüche 1 - 8.

## Claims

1. Method for improving the quality of a print image of a digital printing machine, which is printed onto a material web in an inkjet printing process, wherein the digital printing machine comprises a print head with inkjet nozzles, an image capturing unit for capturing at least a portion of the print image, and a control unit for controlling the print head,

   wherein the control unit obtains its information about the image to be printed from a digital print image which is stored in the control unit in the form of digital target halftone dots and digital target color information, in which the halftone print image is produced, before the start of a printing job, from a conventional digital image format, such as RGB 24 bit, TIFF or PDF as part of a raster image process,
   wherein a test chart is printed at the start and/or during the printing job, the first image data of which are captured by the image capturing unit and transmitted to the control unit, wherein, depending on the first image data, an error correction of defective inkjet nozzles and/or an alignment of the misaligned print head is performed,
   wherein, after completing the error correction and/or alignment, a target print image is then printed, the target image data of which are captured by the image capturing unit, transmitted to the control unit and stored there,
   wherein, following the printing of the target print image, further actual print images are printed, the actual image data of which are captured by the image capturing unit and compared in the control unit with the target image data and stored as target/actual comparison image data,
   wherein, depending on the target/actual comparison image data, a color space correction is performed, wherein the comparison result corresponds to delta color information in the Lab color space and, depending on the delta color information, the control information of the control unit is corrected
   in a control loop with correction of the control information in the control unit in the raster data by image manipulation or in pre-separated
   contone data by means of gradation curves in such a way that the delta color information is reduced.

2. Method according to claim 1, wherein the target print image comprises a subarea of the subsequent actual print images.

3. Method according to any one of claims 1-2, wherein an image area of the actual print image is automatically determined as the target print image.

4. Method according to claim 3, wherein the image area has the largest color range compared to other image areas of the actual print image.

5. Method according to any one of claims 1 - 4, wherein the image capturing unit is a line scan camera.

6. Method according to any one of claims 1 - 4, wherein the image capturing unit is a spectral sensor.

7. Method according to any one of claims 1 - 5, wherein the histogram data of the respective image data are used as a basis for comparing the actual image data with the target image data.

8. Method according to any one of claims 1- 7, wherein further test charts are printed, the results of which are additionally incorporated into the color space correction.

9. Digital printing machine,

   with a print head with inkjet nozzles for printing a print image on a material web in the inkjet printing method,
   with an image capturing unit for capturing at least a portion of the print image, and
   with a control unit for controlling the print head according to a method of claims 1 -8.

## Revendications

1. Procédé d'augmentation de la qualité d'une image d'impression d'une machine d'impression numérique qui est imprimée dans un procédé d'impression par jet d'encre sur une bande de matériau, dans lequel la machine d'impression numérique comprend une tête d'impression avec des buses de jet d'encre, une unité de capture d'image pour la capture d'au moins une partie de l'image d'impression et un dispositif de commande pour la commande de la tête d'impression,

    pour lequel le dispositif de commande tire ses informations sur l'image à imprimer d'une image d'impression numérique qui est enregistrée sous la forme de points de trame de consigne numériques et d'informations de couleur de consigne numériques dans le dispositif de commande, pour lequel l'image d'impression tramée est générée avant le début d'une tâche d'impression à partir d'un format d'image numérique usuel tel que RVB 24 bits, TIFF ou PDF dans le cadre d'un processus d'image tramée,
    pour lequel au début et/ou pendant la tâche d'impression, une mire est imprimée, dont les premières données d'image sont capturées par l'unité de capture d'image et transmises au dispositif de commande, dans lequel en fonction des premières données d'image, une correction de défaut de buses de jet d'encre défectueuses et/ou une orientation de la tête d'impression désajustée est effectuée,
    pour lequel à la fin de la correction de défaut et/ou de l'orientation, une image d'impression de consigne est imprimée, dont les données d'image de consigne sont capturées par l'unité de capture d'image, transmises au dispositif de commande et y sont enregistrées,
    pour lequel suite à l'impression de l'image d'impression de consigne, d'autres images d'impression réelles sont imprimées, dont les données d'image réelles sont capturées par l'unité de capture d'image et comparées dans le dispositif de commande avec les données d'image de consigne et enregistrées comme données d'image de comparaison de consigne-réelles,
    dans lequel en fonction des données d'image de comparaison de consigne-réelles, une correction d'espace de couleur est effectuée, dans lequel le résultat de comparaison correspond à une information de couleur delta dans l'espace de couleur Lab et en fonction de l'information de couleur delta, les informations de commande du dispositif de commande sont corrigées dans
    une boucle de régulation avec la correction des informations de commande dans le dispositif de commande dans les données de trame par manipulation d'image ou dans
    des données à tons continus préséparées par des courbes de gradation de telle manière que l'information de couleur delta diminue.

2. Procédé selon la revendication 1, dans lequel l'image d'impression de consigne comprend une zone partielle des images d'impression réelles suivantes.

3. Procédé selon l'une quelconque des revendications 1 à 2, dans lequel une zone d'image de l'image d'impression réelle est déterminée de manière automatisée comme image d'impression de consigne.

4. Procédé selon la revendication 3, dans lequel la zone d'image présente la plus grande gamme de couleurs par rapport aux autres zones d'image de l'image d'impression réelle.

5. Procédé selon l'une quelconque des revendications 1 à 4, dans lequel l'unité de capture d'image est une caméra linéaire.

6. Procédé selon l'une quelconque des revendications 1 à 4, dans lequel l'unité de capture d'image est un capteur spectral.

7. Procédé selon l'une quelconque des revendications 1 à 5, dans lequel les données d'histogramme des données d'image respectives servent de base à la comparaison des données d'image réelles avec les données d'image de consigne.

8. Procédé selon l'une quelconque des revendications 1 à 7, dans lequel d'autres mires sont imprimées, dont le résultat entre en outre dans la correction d'espace de couleur.

9. Machine d'impression numérique,

    avec une tête d'impression avec des buses de jet d'encre pour l'impression d'une image d'impression dans un procédé d’impression par jet d’encre sur une bande de matériau,
avec une unité de capture d’image pour la capture d’au moins une partie de l’image d’impression et
avec un dispositif de commande pour la commande de la tête d’impression selon un procédé selon les revendications 1 à 8.

104
Steuereinheit
101
105
103
106
102

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20110149331 A1